# EUROPÄISCHE PATENTSCHRIFT

(11) **EP 0 720 632 B1**
(45) Veröffentlichungstag und Bekanntmachung des Hinweises auf die Patenterteilung: **07.01.1998**
(21) Anmeldenummer: 94928332.9
(22) Anmeldetag: 10.09.1994
(51) Int. Cl.: C08J 11/06, C08K 5/3415

(54) **VERFAHREN ZUR SCHONENDEN RECYCLIERUNG VON STYROLPOLYMERISATEN**
PROCESS FOR NON-MODIFYING RECYCLING OF STYRENE POLYMERS
PROCEDE PERMETTANT DE RECYCLER DES POLYMERISATS DE STYRENE SANS LES ALTERER

(30) Priorität: 21.09.1993 DE 4331978
(43) Veröffentlichungstag der Anmeldung: 10.07.1996
(73) Patentinhaber: BASF Aktiengesellschaft, 67063 Ludwigshafen (DE)
(72) Erfinder: HENN, Rolf, D-68775 Ketsch (DE); SCHERZER, Dietrich, D-67433 Neustadt (DE); BACK, Wolf-Dieter, D-67434 Neustadt (DE); WEBER, Reinhold, D-67112 Mutterstadt (DE)
(86) Internationale Anmeldenummer: EP9403034
(87) Internationale Veröffentlichungsnummer: WO9508591

(56) Entgegenhaltungen:
- EP-A- 0 177 988
- DE-U- 9 211 584
- GB-A- 2 030 160

## Beschreibung

Die Erfindung betrifft ein Verfahren zur schonenden Recyclierung von Styrolpolymerisaten. Die Erfindung betrifft insbesondere ein solches Verfahren, bei dem gebrauchte Styrolpolymerisate in Gegenwart von Maleinimiden mit mehreren Imidgruppen aufgeschmolzen werden.

Polystyrol und Styrolpolymerisate, insbesondere auch aus diesen aufgebaute Schaumstoffe, neigen beim Aufschmelzen in einem Extruder zum Molekulargewichtsabbau. Dieser führt u.a. zu verändertem Fließverhalten, so daß das erhaltene Granulat häufig für viele Anwendungen nicht geeignet ist und entsorgt werden muß. Die Abbaureaktionen sind besonders ausgeprägt, wenn die thermoplastischen Polymerisate organische Peroxide enthalten (vgl. EP-A-0 405 935, US-A-3,806,558).

Zur Verringerung des Molekulargewichtsabbaues in Styrolpolymerisaten wurde daher das Aufschmelzen des Styrolpolymerisats in Gegenwart von Maleinsäureanhydrid vorgeschlagen (vgl. "Reaction of maleic anhydride and molten polystyrene in the absence and presence of peroxides", Angew. Makromol. Chem. Band 117 (1983), Seiten 195 bis 209). Hierdurch wird insbesondere in Anwesenheit von Peroxiden eine Verringerung des Molekulargewichtsabbaues beobachtet.

In der EP-A-0 405 935 wird dagegen das Aufschmelzen von thermoplastischen Polymerisaten in Gegenwart von dihydroaromatischen Verbindungen vorgeschlagen. Als dihydroaromatische Verbindung wird z.B. 9,10-Dihydrophenanthren genannt. Zusätzlich zur dihydroaromatischen Verbindung werden polyfunktionelle Monomere, insbesondere Bismaleinimide wie N,N' -m-Phenylenbismaleinimid und N,N'-Ethylenbismaleinimid verwendet.

Aus der EP-A-0 506 614 ist die Verwendung von Antioxidantien vom Typ Irganox® der Ciba-Geigy AG bekannt, durch welche der Abbau von Styrolpolymerisaten unter Extrusionsbedingungen auch in gewissem Umfang begrenzt werden kann. Bei Anwesenheit von Peroxiden im Styrolpolymerisat, längeren Verweilzeiten der Styrolpolymerisate im Extruder, oder bei bereits eingetretenen Schädigungen der Styrolpolymerisate ist ihr Zusatz allein jedoch nicht mehr ausreichend.

Aufgabe der vorliegenden Erfindung war es daher, ein Verfahren bereitzustellen, das die Recyclierung von Styrolpolymerisaten durch Aufschmelzen in einem Extruder und anschließende Verarbeitung zu Granulat ermöglicht, ohne daß eine durch Abbaureaktionen im Styrolpolymerisat hervorgerufene Molekulargewichtsverringerung eintritt. Dieses Verfahren sollte insbesondere auch ein mehrfaches Recycling ermöglichen und Formmassen ergeben, welche für die Herstellung von Schaumstoffen verwendet werden können.

Diese Aufgabe wird gelöst durch ein

Verfahren zur schonenden Recyclierung von Styrolpolymerisaten, das die Schritte umfaßt
a) Aufschmelzen der gegebenenfalls in zerkleinerter Form vorliegenden Styrolpolymerisate in einem Extruder,
b) Extrudieren der dabei erhaltenen Schmelze, der gegebenenfalls Treibmittel und/oder übliche Zusatzstoffe zugefügt sein können,
wobei das Aufschmelzen in Gegenwart von 0,01 bis 4 Gew.-%, bezogen auf Styrolpolymerisat, Bismaleinimiden, Trismaleinimiden und/oder Maleinimiden mit mehr als drei Imidgruppen durchgeführt wird.

Vorteilhaft wird hierbei die gegebenenfalls treibmittelhaltige Schmelze in Strangform extrudiert und zu Granulat verarbeitet.

Erfindungsgemäß werden insbesondere Styrolpolymerisate eingesetzt, welche anionisch, thermisch oder unter Verwendung eines Radikalbildners hergestellte Styrol-Homopolymerisate sowie entsprechende Copolymerisate von Styrol mit anderen Comonomeren sind. Als solche Comonomere kommen insbesondere in Betracht α-Methylstyrol, p-Methyl-styrol, kernhalogenierte Styrole, kernalkylierte Styrole, Acrylnitril, Ester der (Meth)acrylsaure von Alkoholen mit 1 bis 8 C-Atomen, ggf. N-substituierte Amide der (Meth)acrylsäure, N-Vinylverbindungen wie N-Vinylcarbazol und Maleinsäureanhydrid.

Ebenfalls Verwendung finden können auch solche Styrolpolymerisate, die unter Einsatz eines kautschukbildenden Polymeren wie Polybutadien, Styrol-Acrylnitril-, Styrol-Acrylester-Copolymeren oder ähnlicher Elastomerer oder Blends von einzelnen Elastomeren schlagzäh modifiziert wurden.

Im erfindungsgemäßen Verfahren können mit Flammschutzmitteln ausgerüstete Styrolpolymerisate eingesetzt werden. Unter Flammschutzmitteln sind insbesondere Verbindungen zu verstehen, die ein oder mehrere Chlor- und/oder Brom-Atome enthalten, wobei diese an einen aromatischen, aliphatisch-aromatischen, aliphatischen oder cycloaliphatischen C₆- bis C₂₀-Rest gebunden sind, welcher ggf. noch Ester-, Anhydrid-, Amid-, Imid-, Ether-, Urethan-oder andere funktionelle Gruppen tragen kann.

Als Synergist für solcher Flammschutzmittel können in den Styrolpolymerisaten zudem radikalbildende Substanzen vorliegen, wie Azo-, Peroxy- oder sonstige Verbindungen (z.B. sterisch anspruchsvolle Substituenten tragende Verbindungen wie Dicumyl = 2,3-Dimethyl-2,3-diphenyl-butan), welche bei höheren Temperaturen (meist > 120°C) unter Radikalbildung zerfallen und die radikalische Zersetzung des Flammschutzmittels fördern.

Die Styrolpolymerisate können darüber hinaus weitere übliche Hilfsstoffe wie beispielsweise Farbstoffe, Pigmente, Füllstoffe, Glasfasern, Stabilisatoren, Keimbildner und Gleitmittel enthalten.

Das erfindungsgemäße Verfahren eignet sich insbesondere für das Recycling von Styrolpolymerisaten, die zu einem hohen Anteil aus Polystyrol-Schaumstoffen bestehen. Die im erfindungsgemäßen Verfahren eingesetzten Styrolpolymerisate bestehen daher vorzugsweise zu mindestens 50 Gew.-% und besonders bevorzugt zu mindestens 90 Gew.-% aus Polystyrol-Schaumstoffen in zerkleinerter Form.

In einer vorteilhaften Ausführungsform des erfindungsgemäßen Verfahrens wird der Schmelze im Extruder ein Treibmittel in einer Menge von 3 bis 17 Gew.-%, bezogen auf Styrolpolymerisat, zugefügt.

In einer besonders bevorzugten Ausführungsform wird die treibmittelhaltige Schmelze zu geschäumten Platten extrudiert.

In einer alternativen Ausführungsform des erfindungsgemäßen Verfahrens wird eine keine Treibmittel enthaltende Schmelze in eine Strangform extrudiert, zu Granulat verarbeitet und das Granulat anschließend in wäßriger Suspension in Gegenwart eines Treibmittels mit dem Treibmittel auf an sich bekannte Weise imprägniert.

Als Treibmittel können die üblichen und bekannten Treibmittel verwendet werden.

Für die Herstellung partikelförmiger, expandierbarer Styrolpolymerisate werden im allgemeinen C₃- bis C₆-Kohlenwasserstoffe, wie Propan, n-Butan, Isobutan, n-Pentan, Isopentan, Neopentan und/oder Hexan verwendet. Vorzugsweise wird ein handelsübliches Pentan-Isomerengemisch verwendet. Für die Herstellung extrudierter Schäume werden im allgemeinen Treibmittel verwendet, welche möglichst geringe Anteile an Fluorchlorkohlenwasserstoffen enthalten. Hierzu werden vorzugsweise relativ umweltfreundliche Fluorchlorkohlenwasserstoffe und/oder Fluorkohlenwasserstoffe in Mischung mit halogenfreien Treibmittelbestandteilen wie Ethanol, Kohlendioxid oder Dimethylether eingesetzt.

Im erfindungsgemäßen Verfahren werden vorzugsweise Bismaleinimide der allgemeinen Formel I, 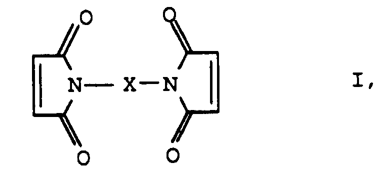 wobei X für R¹, R¹-R² oder R¹-Y-R² steht, worin
R¹ und R² gleich oder verschieden sein können und einen divalenten, gegebenenfalls weitere Substituenten tragenden, aromatischen, aliphatischen, cycloaliphatischen oder heteroaromatischen Rest bedeuten, und
Y für (CH₂)ₙ (mit n = 1 bis 5), O, SO₂ oder NR³ (mit R³ = C₁-C₅-Alkyl) steht,
eingesetzt.

Die Bismaleinimide, Trismaleinimide oder Maleinimide mit mehr als drei Maleinimidfunktionen werden im erfindungsgemäßen Verfahren in einer Menge von 0,01 bis 4 Gew.-%, bezogen auf Styrolpolymerisat, eingesetzt. Vorzugsweise werden hierbei Bismaleinimide in einer Menge von 0,05 bis 3 Gew.-%, bezogen auf Styrolpolymerisat, eingesetzt.

Erfindungsgemäß werden vorzugsweise Bismaleinimide der allgemeinen Formel I verwendet, worin R¹ und R² gleich oder verschieden sind und meta-Phenylen oder para-Phenylen bedeuten.

Besonders geeignete Bismaleinimide werden unter der Bezeichnung Palimide® von der BASF Aktiengesellschaft vertrieben. Beispiele hierfür sind Palimid® M 160 (X = R¹-Y-R¹, wobei R¹ für para-Phenylen und Y für CH2 steht), Palimid® M 200 (X = R¹, wobei R¹ meta-Phenylen ist), Palimid® 205 (X = R¹⁻Y-R², wobei Y für SO₂ und R¹ bzw. R² jeweils für meta-Phenylen stehen).

Die Herstellung von Bismaleinimiden erfolgt am einfachsten gemäß US-A 2,444,536 durch Umsetzung von Aminen mit Maleinsäureanhydrid und nachfolgender Wasserabspaltung durch Acetanhydrid/Natriumacetat (s.a. J. Gonzales Ramos, J.M. Barrales-Rienda, M. Sanches Chaves: Anales de Quimica (Madrid) 73 (1977), 139-145).

Die erfindungsgemäß eingesetzten Maleinimide können allein, in Mischung oder zusammen mit weiteren Stabilisatoren (wie z.B. sterisch gehinderten phenolischen Stabilisatoren) eingesetzt werden.

Das erfindungsgemäße Verfahren hat mehrere Vorteile. So ist die Recyclierung von Polystyrol oder Styrolcopolymerisaten durch Aufschmelzen in einem Extruder und anschließende Verarbeitung zu Granulat ohne Molekulargewichtsabbau möglich, wobei sogar bereits durch Abbau geschädigtes Material eingesetzt werden kann.

In den Beispielen beziehen sich die Prozentangaben auf das Gewicht.

### Beispiele 1 bis 19

In den Beispielen 1 bis 19 wurde Polystyrol des Typs VPT der BASF Aktiengesellschaft (gewichtsmittleres Molgewicht etwa 200,000) verwendet, das einen Melt-Flow-Index MFI (210°C/10 kp) von 70,4 ml/10 min hatte.

Das Polystyrol-Granulat wurde in einem Schaufel-Mischer (Typ Lödige) mit den in der Tabelle 1 angegebenen Mengen an verschiedenen Beschichtungsmitteln beschichtet. Das Granulat wurde anschließend in einem Zweischnecken-Extruder (der Firma Werner & Pfleiderer, Stuttgart) mit einem Schneckendurchmesser von 30 mm (ZSK 30) aufgeschmolzen, in Strangform extrudiert, durch ein Wasserbad geleitet und anschließend granuliert. Der Durchsatz betrug 10 kg/h, was einer Verweilzeit im Extruder von 90 sec entsprach. Am Granulat wurden die in der Tabelle angegebenen Werte des Melt-Flow-Index MFI (210°C/10 kp) gemessen. An den Granulaten der Beispiele 9 bis 19 wurde zusätzlich die Viskosität VZ (0,5%ig in Toluol bei 25°C) nach DIN 53726 an entgasten Proben bestimmt. In den Beispielen 9 bis 19 wurde Dicumylperoxid als Beschichtungsmittelkomponente eingesetzt, welches häufig als Flammschutz-Synergist in flammgeschützten, expandierbaren Styrolpolymerisaten eingesetzt wird und bei der Extrusion von Styrolpolymerisaten deren Abbaureaktionen beschleunigt.

### Beispiele 20 und 21

### Beispiel 20

20 kg eines Polystyrol-Granulates, das aus EPS-Formteilen mittels einer Recycling-Anlage (Erema® Anlage 60 A der Firma EREMA, Linz, Osterreich) durch Zerkleinern, Vorverdichten und anschließendes Extrudieren (1. Extrusion) mit nachfolgendem Heißabschlag gewonnen worden war, wurden mit 0,2 kg Palimid® M 160 (Bismaleinimid von 4,4'-Diaminodiphenylmethan) in einem Taumelmischer beschichtet. Das beschichtete Granulat wurde in einem Zweischnecken-extruder (Schneckendurchmesser 53 mm; ZSK 53 der Firma Werner & Pfleiderer, Stuttgart) bei 180°C, 200 Umdrehungen/min und einem Durchsatz von 30 kg/h extrudiert (2. Extrusion). Die Massenaustrittstemperatur lag zwischen 222 und 229°C. Die austretenden Stränge wurden in einem Wasserbad gekühlt und mittels rotierender Messer zu Granulat (1 x 1,5 mm) verarbeitet. Die VZ- und MFI 1190°C/10 kp)-Werte wurden daran anschließend sowie nach einem erneuten Extrudierschritt (3. Extrusion) unter gleichen Bedingungen bestimmt. Die Ergebnisse sind in der Tabelle 3 dargestellt.

Jeweils 6 kg des in Beispiel 20 eingesetzten Granulates vor und nach dem 3. Extrudieren wurden in einen 40 l-Reaktor gegeben, der zuvor mit 21 kg Wasser, 76 g Natriumpyrophosphat, 155 g Magnesiumsulfat-heptahydrat sowie 50 g Mersolat® K 30, 40%ig in Wasser (Alkylbenzolsulfonat der Bayer AG), beschickt worden war. Der Reaktor wurde verschlossen, mit Stickstoff gespült und unter einem anfänglichen Stickstoffdruck von 1 atü auf 90°C erhitzt. Anschließend wurde während 15 Minuten 720 g einer Mischung aus iso- und n-Pentan (25/75) zugedrückt und die Suspension für weitere 10 Stunden bei 90°C gerührt. Danach wurde abgekühlt, und der Reaktor entspannt. Die Suspension wurde über ein Drahtsieb abgelassen, in dem sich die treibmittelhaltigen Perlen fingen. Unmittelbar danach wurde der Pentangehalt in den Perlen bestimmt (vgl. Tabelle 3). Die Perlen wurden in einem offenen Blech in einer Schichtdicke von 4 cm bei 23°C und 50 % Luftfeuchte ausgelegt (konditioniert), um eine Vergleichmäßigung der Schaumstruktur zu erzielen.

Nach 1, 24 und 45 Tagen wurde jeweils ein Teil der Perlen in einem handelsüblichen Laborvorschäumer (Typ Rauscher) verschäumt und die minimale Schüttdichte SDₘᵢₙ nach 3 Minuten Schäumzeit ermittelt. Nach 24-tägigem Ausliegen der Perlen wurde außerdem noch der Pentangehalt bestimmt. Die gemessenen Daten sind ebenfalls in der Tabelle 3 zusammengestellt.

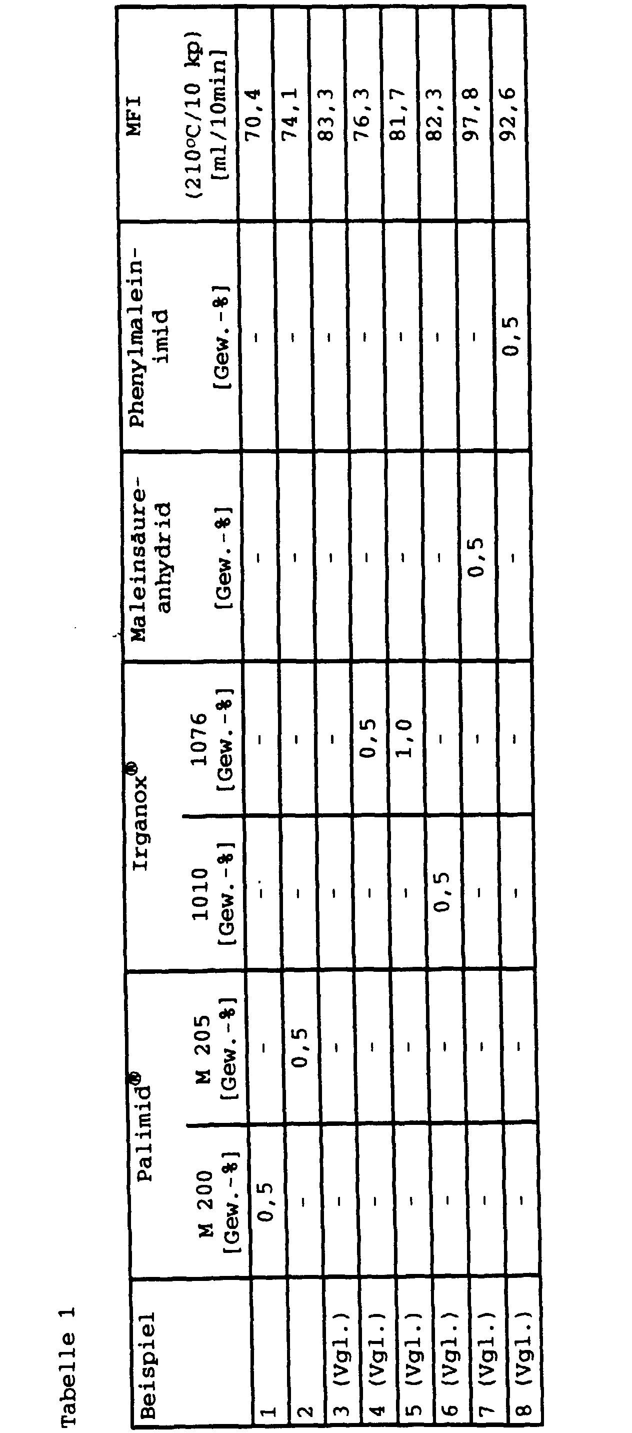

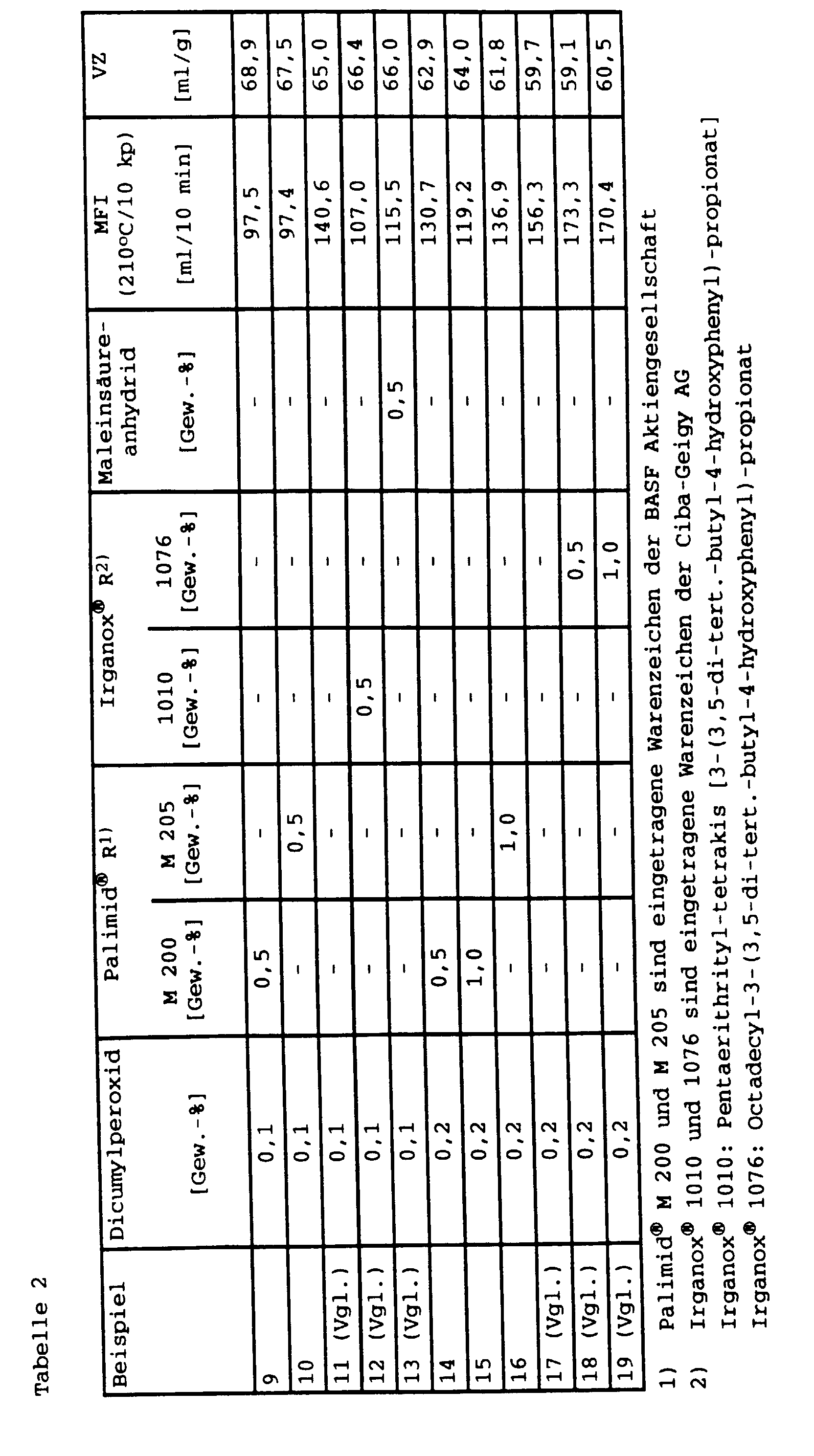

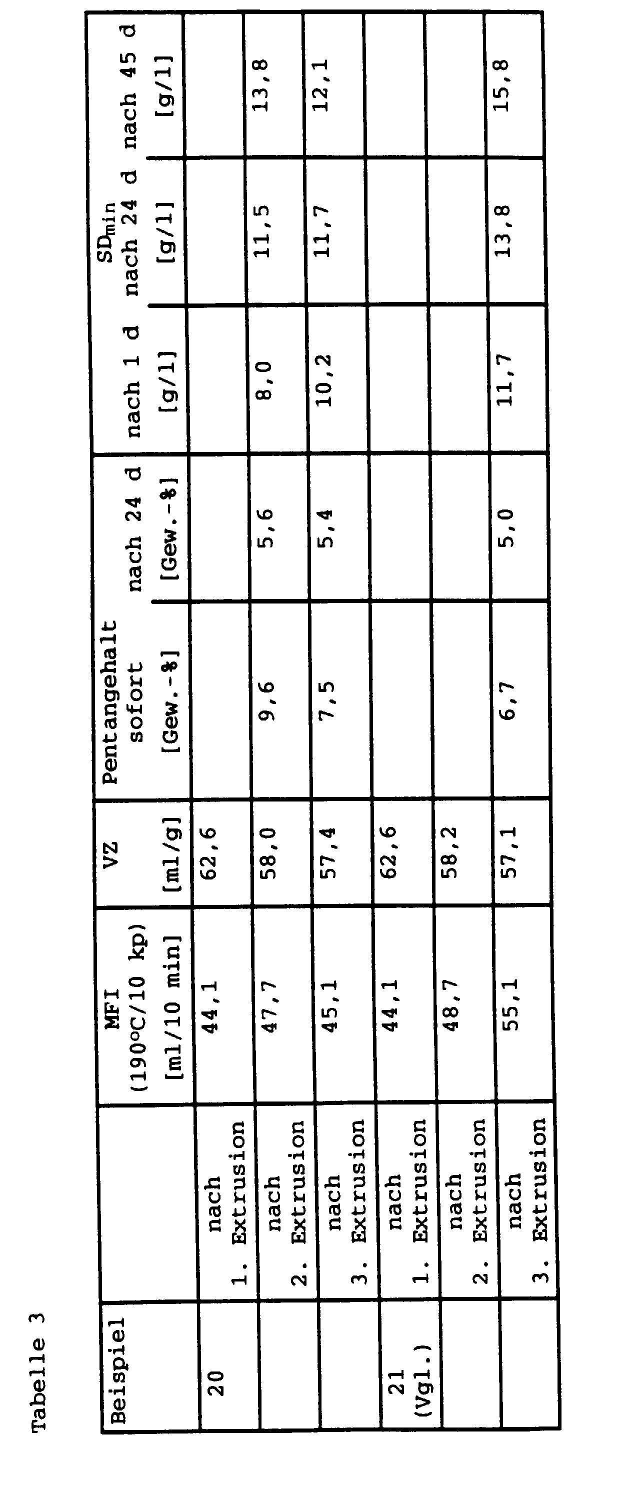

### Beispiel 21 (Vergleichsbeispiel)

Es wurde gearbeitet wie in Beispiel 20, jedoch ohne Mitverwendung von Palimid® M 160.

Die in den Tabellen 1 bis 3 aufgeführten Ergebnisse belegen das besonders schonende Aufschmelzen von Styrolpolymerisaten beim erfindungsgemäßen Verfahren. Die als Folge des Aufschmelzens und Extrudierens bei den Styrolpolymerisaten üblicherweise auftretende Erhöhung der MFI-Werte und Erniedrigung der VZ-Werte ist beim erfindungsgemäßen Verfahrens sehr niedrig. Der Effekt ist insbesondere beim mehrfachen Extrudieren der Styrolpolymerisate ausgeprägt.

Die Ergebnisse zeigen darüber hinaus, daß die Verwendung von Bismaleinimiden bei der Extrusion von Styrolpolymerisaten eine verbesserte Expandierfähigkeit nach Imprägnieren mit Treibmitteln bewirkt, die außerdem länger erhalten bleibt als bei nicht unter Zusatz von Bismaleinimiden extrudierten Styrolpolymerisaten.

### Beispiel 22

### Herstellung eines Extruderschaumes

In einem Extruder, wie er beispielsweise in der DE-A-38 43 537 beschrieben ist, mit einem inneren Schneckendurchmesser von 120 mm wurde Polystyrol mit einem mittleren Molekulargewicht (Gewichtsmittel) von 220,000 und einer Polydispersität von 3,6 in einer Menge von 840 kg/h unter Zusatz von 7 kg/h Hexabromcyclododecan, 1,5 kg/h Dicumyl und 3,8 kg/h Talkum sowie 8,4 kg/h Palimid® M 160 aufgeschmolzen.

Die Schmelze wurde unter Druck mit folgender Treibmittel-Mischung begast: HFCKW 142 b (CH₃-CClF₂) 111 kg/h, Ethanol 11 kg/h, CO₂ 11 kg/h.

Nach einer mittleren Verweilzeit von 45 Minuten wurde die homogene Schmelze durch eine Düse ins Freie gepreßt, so daß das Treibmittel expandieren und die Schmelze zum Schäumen bringen konnte.

Der resultierende Schaumstrang wurde nach dem Abkühlen in Einzelplatten geschnitten und hieran die Dichte durch Eintauchen in Wasser (Verdrängungsmessung) bestimmt.

An Probekörpern, die aus diesem Schaum geschnitten wurden, wurde die Druckfestigkeit nach DIN 53421 sowie die Warmeformbestandigkeit als Stauchung nach DIN 18164 bestimmt. Die Ergebnisse sind in der Tabelle 4 dargestellt.

### Beispiel 23

Es wurde gearbeitet wie in Beispiel 22, nur daß zum Polystyrol ein EPS-Recyclat, wie es in einer Recycling-Anlage (vgl. Beispiel 20) angefallen war und ein gewichtsmittleres Molekulargewicht von 165,000 sowie eine Polydispersität von 3,4 besaß, in gleicher Menge zugegeben wurde (vgl. Tabelle 4).

### Beispiel 24 (Vgl.)

Es wurde gearbeitet wie in Beispiel 22, jedoch ohne Zusatz des Bismaleinimids (vgl. Tabelle 4).

### Beispiel 25 (Vgl.)

Es wurde gearbeitet wie in Beispiel 23, jedoch ohne Zusatz des Bismaleinimids (vgl. Tabelle 4).

**Tabelle 4**

| Beispiel | Schaumstoffdichte [kg/m³] | Druckspannung b. 10 % Stauchung [N/mm²] | Wärmeformbeständigkeit Stauchung [%] |
|---|---|---|---|
| 22 | 33,0 | 0,374 | 1,8 |
| 23 | 32,5 | 0,348 | 2,1 |
| 24 (Vgl.) | 33,8 | 0,350 | 2,1 |
| 25 (Vgl.) | 34,4 | 0,334 | 2,5 |

Wie die Ergebnisse in Tabelle 4 zeigen, bewirkt der Zusatz von Bismaleinimiden eine bessere Expandierbarkeit der treibmittelhaltigen Schmelze sowie eine höhere Druckfestigkeit und Wärmeformbeständigkeit des Schaumstoffes. Zusätzlich ist die Verwendung größerer Mengen von EPS-Recyclat unter Beibehaltung der guten Eigenschaften möglich.

## Patentansprüche

1. Verfahren zur schonenden Recyclierung von Styrolpolymerisaten, das die Schritte umfaßt
a) Aufschmelzen der gegebenenfalls in zerkleinerter Form vorliegenden Styrolpolymerisate in einem Extruder und
b) Extrudieren der dabei erhaltenen Schmelze, der gegebenenfalls Treibmittel und/oder übliche Zusatzstoffe zugefügt sein können,
dadurch gekennzeichnet, daß das Aufschmelzen in Gegenwart von 0,01 bis 4 Gew.-%, bezogen auf Styrolpolymerisat, Bismaleinimiden, Trismaleinimiden und/oder Maleinimiden mit mehr als drei Imidgruppen durchgeführt wird.

2. Verfahren nach Anspruch 1, dadurch gekennzeichnet, daß Bismaleinimide der allgemeinen Formel I, 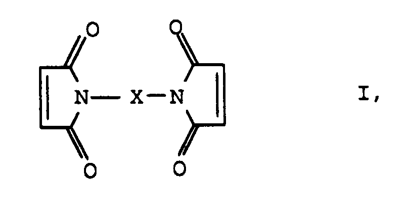 wobei X für R¹, R¹-R² oder R¹-Y-R² steht, worin
R¹ und R² gleich oder verschieden sein können und einen divalenten, gegebenenfalls weitere Substituenten tragenden aromatischen, aliphatischen, cycloaliphatischen oder heteroaromatischen Rest bedeuten, und
Y für (CH₂)ₙ (mit n = 1 bis 5), O, SO₂ oder NR³ (mit R³ = C₁-C₅-Alkyl) steht,
eingesetzt werden.

3. Verfahren nach Anspruch 1 oder 2, dadurch gekennzeichnet, daß Bismaleinimide in einer Menge von 0,05 bis 3 Gew.-%, bezogen auf Styrolpolymerisat, eingesetzt werden.

4. Verfahren nach Anspruch 2 oder 3, dadurch gekennzeichnet, daß Bismaleinimide der allgemeinen Formel I verwendet werden, worin R¹ und R² gleich oder verschieden sind und meta-Phenylen oder para-Phenylen bedeuten.

5. Verfahren nach einem der Ansprüche 1 bis 4, dadurch gekennzeichnet, daß die eingesetzten Styrolpolymerisate zu mindestens 50 Gew.-% aus Polystyrol-Schaumstoffen in zerkleinerter Form bestehen.

6. Verfahren nach einem der Ansprüche 1 bis 5, dadurch gekennzeichnet, daß der Schmelze im Extruder ein Treibmittel in einer Menge von 3 bis 17 Gew.-%, bezogen auf Styrolpolymerisat, zugefügt wird.

7. Verfahren nach einem der Ansprüche 1 bis 6, dadurch gekennzeichnet, daß die gegebenenfalls treibmittelhaltige Schmelze in Strangform extrudiert und zu Granulat verarbeitet wird.

8. Verfahren nach Anspruch 7, dadurch gekennzeichnet, daß die keine Treibmittel enthaltende Schmelze in eine Strangform extrudiert und zu Granulat verarbeitet wird, und anschließend das Granulat in wäßriger Suspension in Gegenwart eines Treibmittels mit dem Treibmittel imprägniert wird.

9. Verfahren nach Anspruch 6, dadurch gekennzeichnet, daß die treibmittelhaltige Schmelze zu geschäumten Platten extrudiert wird.

## Claims

1. A process for the gentle recycling of styrene polymers, which comprises the steps
a) melting of the styrene polymer, which may be in comminuted form, in an extruder and
b) extrusion of the resulting melt, to which blowing agent and/or conventional additives may be added,
wherein the melting is carried out in the presence of from 0.01 to 4% by weight, based on the styrene polymer, of a bismaleimide, a trismaleimide and/or a maleimide having more than three imide groups.

2. A process as claimed in claim 1, wherein a bismaleimide of the formula I 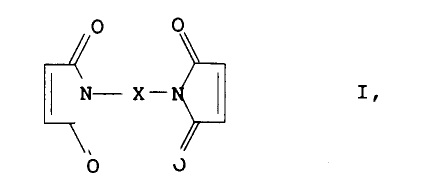 where X is R¹, R¹-R² or R¹-Y-R²,
R¹ and R² may be identical or different and are each a divalent aromatic, aliphatic, cycloaliphatic or heteroaromatic radical which may carry further substituents and
Y is (CH₂)ₙ (where n is from 1 to 5), O, SO₂ or NR³ (where R³ is C₁-C₅-alkyl),
is used.

3. A process as claimed in claim 1 or 2, wherein the bismaleimide is used in an amount of from 0.05 to 3% by weight, based on the styrene polymer.

4. A process as claimed in claim 2 or 3, wherein the bismaleimide of the formula I, where R¹ and R² are identical or different and are each meta-phenylene or para-phenylene, is used.

5. A process as claimed in any of claims 1 to 4, wherein the styrene polymer used contains at least 50% by weight of a polystyrene foam in comminuted form.

6. A process as claimed in any of claims 1 to 5, wherein a blowing agent in an amount of from 3 to 17% by weight, based on the styrene polymer, is added to the melt in the extruder.

7. A process as claimed in any of claims 1 to 6, wherein the melt, which may contain blowing agent, is extruded and the extrudate is processed to give granules.

8. A process as claimed in claim 7, wherein the melt, which does not contain blowing agent, is extruded and the extrudate is processed to give granules, and the granules are then impregnated with the blowing agent in aqueous suspension in the presence of a blowing agent.

9. A process as claimed in claim 6, wherein the blowing agent-containing melt is extruded to give expanded sheets.

## Revendications

1. Procédé pour le recyclage ménager de polymères du styrène, qui comprend les étapes suivantes :
a) fusion des polymères du styrène qui se présentent éventuellement sous une forme broyée, dans une extrudeuse et
b) extrusion de la masse fondue ainsi obtenue à laquelle on peut avoir ajouté éventuellement des agents porogènes et/ou des additifs usuels,
caractérisé en ce que l'on entreprend la fusion en présence de 0,01 à 4% en poids, par rapport au polymère du styrène, de bismaléimides, de trismaléimides et/ou de maléimides comportant plus de trois groupes imide.

2. Procédé suivant la revendication 1, caractérisé en ce que l'on utilise des bismaléimides de la formule générale I, 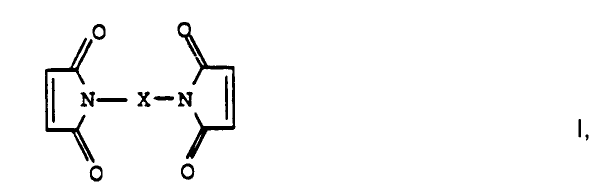 dans laquelle X représente R¹, R¹-R², ou R¹-Y-R², où
R¹ et R² peuvent être identiques ou différents et représentent un reste hétéroaromatique, cycloaliphatique, aliphatique, ou aromatique, bivalent, portant éventuellement d'autres substituants et
Y représente (CH₂)ₙ avec n = à 5), O, SO₂ ou NR³ (avec R³ = alkyle en C₁ à C₅).

3. Procédé suivant la revendication 1 ou 2, caractérisé en ce que l'on utilise les bismaléimides en une proportion de 0,05 à 3% en poids, par rapport au polymère du styrène.

4. Procédé suivant la revendication 2 ou 3, caractérisé en ce que l'on utilise les bismaléimides de la formule générale I dans laquelle R¹ et R² sont identiques ou différents et représentent un reste métaphénylène ou paraphénylène.

5. Procédé suivant l'une quelconque des revendications 1 à 4, caractérisé en ce que les polymères du styrène utilisés se composent pour au moins 50% en poids de mousses de polystyrène sous forme broyée.

6. Procédé suivant l'une quelconque des revendications 1 à 5, caractérisé en ce que l'on ajoute à la masse fondue dans l'extrudeuse, un agent porogène en une proportion de 3 à 17% en poids, par rapport au polymère du styrène.

7. Procédé suivant l'une quelconque des revendications 1 à 6, caractérisé en ce que l'on extrude la masse fondue contenant éventuellement un agent porogène sous forme de boudin et on la transforme en granulé.

8. Procédé suivant la revendication 7, caractérisé en ce que l'on extrude la masse fondue ne contenant pas d'agent porogène, sous forme d'un boudin et on la transforme en granulé et on imprègne ensuite le granulé en suspension aqueuse de l'agent porogène, en présence d'un agent porogène.

9. Procédé suivant la revendication 6, caractérisé en ce que l'on extrude la masse fondue contenant l'agent porogène en plaques expansées ou moussées.
